Europäisches Patentamt

(19) European Patent Office

Office européen des brevets

(11) Numéro de publication: **0 006 801**
**A1**

## (12) DEMANDE DE BREVET EUROPEEN

(21) Numéro de dépôt: **79400399.6**

(22) Date de dépôt: **18.06.79**

(51) Int. Cl.³: **G 21 C 1/02**, G 21 C 13/02,
F 22 B 37/24

(30) Priorité: **23.06.78 FR 7818821**

(43) Date de publication de la demande: **09.01.80**
**Bulletin 80/1**

(84) Etats contractants désignés: **BE DE GB IT**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Robin, Marcel, 25, Avenue de l'Europe, F-92310 Sevres (FR)**

(74) Mandataire: **Mongredien, André et al, c/o Brevatome 25, rue de Ponthieu, F-75008 Paris (FR)**

(54) **Chaudière nucléaire à neutrons rapides à métal liquide caloporteur.**

(57) Chaudière nucléaire à neutrons rapides à métal liquide caloporteur comprend une cuve (4) qui reçoit le cœur (24) du réacteur et le métal liquide, au moins un échangeur de chaleur (6) entre le métal liquide et un deuxième fluide, une première conduite (28) qui relie la cuve à l'entrée de l'échangeur de chaleur; la conduite débouche dans la cuve au-dessus du cœur et une deuxième conduite (30) relie la cuve à la sortie de l'échangeur de chaleur; la cuve est munie à sa périphérie de premiers moyens de supportage (12) à un niveau donné; la première conduite est rectiligne et horizontale et débouche dans la cuve au-dessus des premiers moyens de supportage; l'échangeur de chaleur est muni de deuxièmes moyens de supportage (40), au niveau donné; les deuxièmes moyens de supportage permettent un déplacement de l'échangeur selon la direction de la première conduite.

EP 0 006 801 A1

1

La présente invention a pour objet une chaudière nucléaire refroidie par un métal liquide.

De façon plus précise, la présente invention concerne parmi ces réacteurs ceux du type à boucles. On sait qu'il existe deux grandes catégories de réacteurs à neutrons rapides, d'une part les réacteurs à boucles, et d'autre part les réacteurs dits intégrés.

Dans le deuxième type de réacteurs, la cuve dite principale contient une cuve interne dite primaire qui a pour fonction essentielle de séparer le métal liquide chaud sortant du coeur du métal liquide froid sortant des pompes et des échangeurs et entrant dans le coeur. Ces réacteurs sont dits intégrés car les protections neutroniques du coeur, les pompes primaires et les échangeurs primaires sont dans la cuve elle-même. Un deuxième circuit de métal liquide (circuit secondaire) transfère la chaleur du circuit primaire de métal liquide à un circuit d'eau-vapeur qui alimente les turbines de production d'énergie électrique. On comprend que, dans ce cas, la cuve principale doit avoir un volume très important, ce qui augmente très sensiblement son prix ainsi que celui du métal liquide constituant le matériau caloporteur.

Dans le premier type de réacteurs dits à boucles, la cuve ne contient pratiquement que le coeur et le métal liquide qui sert à le refroidir, les pompes et les échangeurs primaires et les conduites de liaison étant implantés à l'extérieur de la cuve. Des tuyauteries raccordent chaque échangeur à la cuve pour l'introduction du métal liquide froid à la base du coeur et pour la sortie du métal liquide chaud à la sortie du coeur.

On comprend que dans ce premier type, la cuve peut avoir une taille beaucoup plus réduite, ce qui diminue son poids et la quantité de métal liquide nécessaire, mais

B 6479.3 GD

2

la présence des échangeurs et pompes primaires à l'extérieur de la cuve exige des tuyauteries munies de lyres de dilatation qui augmentent l'encombrement global de l'installation.

La présente invention concerne ce premier type de réacteur, et plus précisément le problème de la liaison par la conduite primaire de sortie de la cuve avec un échangeur de chaleur, afin de limiter les contraintes mécaniques qui sont provoquées par les effets de température, et de réduire la longueur des conduites afin de limiter l'encombrement global de l'installation.

De préférence encore, mais non exclusivement, l'invention concerne cette partie de l'installation nucléaire pour un type particulier de réacteurs à boucles, dits réacteurs semi-intégrés. Il s'agit d'un réacteur nucléaire à neutrons rapides dont les échangeurs et les pompes sont sortis de la cuve, mais dans lesquels, comme dans les réacteurs du type intégré, une cuve principale contient une cuve interne primaire qui sépare le métal liquide froid du métal liquide chaud, et n'est soumise qu'à une irradiation très limitée car le coeur est entouré des protections neutroniques.

Selon un mode encore plus particulier de réalisation, l'invention concerne un réacteur nucléaire semi-intégré dans lequel le circuit secondaire de métal liquide est supprimé. En d'autres termes, dans les échangeurs primaires, le métal liquide primaire sortant du coeur échange directement de la chaleur avec le fluide eau-vapeur d'alimentation des turbines. Bien entendu, ces échangeurs sont d'un type très particulier afin de résoudre les problèmes de sécurité liés à l'échange direct de chaleur entre le métal liquide primaire et l'eau-vapeur. Des exemples de réalisation de tels échangeurs sont décrits dans la demande de brevet français n° 7703192 du 4 février 1977 pour "Bloc échangeur-pompe" déposée au nom du demandeur. En outre, dans de tels échangeurs, la pompe est intégrée à l'échangeur de façon à éliminer la conduite de liaison entre ces appareils.

En plus des problèmes de contraintes thermiques dans les liaisons entre la cuve et les échangeurs, il est encore nécessaire de prendre en considération la nécessité d'équilibrer les échangeurs de façon telle qu'ils puissent résister à des séismes d'amplitude raisonnablement prévisibles sur le site d'implantation.

Dans l'art antérieur, on a cherché à résoudre les premiers problèmes de contraintes thermiques comme par exemple dans le brevet britannique numéro 985 463, à l'exclusion des conséquences d'une secousse sismique. En effet, dans ce brevet qui décrit un réacteur à boucles refroidi par un métal liquide, la liaison entre la cuve et les échangeurs est faite par des canalisations coaxiales et le supportage de la cuve et de l'échangeur ont lieu dans le même plan horizontal contenant l'axe desdites canalisations. Le supportage des réservoirs contenant les échangeurs se fait par l'intermédiaire de portées annulaires reposant sur des roulements à rouleaux qui permettent un déplacement dans le sens de l'axe des canalisations coaxiales lorsque des dilatations thermiques interviennent.

Cette disposition présente toutefois le grave inconvénient de ne prévoir que l'absorption du seul mouvement de translation des échangeurs selon les conduites coaxiales à l'exclusion précisément des risques de mouvements sismiques ; par ailleurs, les conduites coaxiales n'autorisent pas l'emploi sur la circulation du métal liquide de vannes ou de clapets de sécurité, permettant le réglage des débits et, en cas de besoin, l'isolement

4

complet d'un échangeur, la chaudière continuant à fonctionner.

La présente invention a pour objet une chaudière nucléaire qui résout l'ensemble des problèmes précédents en apportant un confort accru sur le plan de la sécurité, notamment par un mode de supportage des échangeurs qui en limite les déplacements possibles.

Cette chaudière est caractérisée principalement en ce qu'elle comprend :

- une cuve apte à recevoir le coeur du réacteur et ledit métal liquide ;

- au moins un échangeur de chaleur apte à réaliser un échange thermique entre ledit métal liquide et un deuxième fluide ;

- une première conduite apte à relier ladite cuve à l'entrée du ou d'un échangeur de chaleur, ladite conduite débouchant dans la cuve au-dessus du coeur ;

- une deuxième conduite apte à relier ladite cuve à la sortie dudit ou d'un échangeur de chaleur, ladite cuve étant munie sur sa périphérie externe de premiers moyens de supportage disposés à un niveau donné, ladite première conduite étant sensiblement rectiligne et horizontale et débouchant dans ladite cuve au-dessus et au voisinage desdits premiers moyens de supportage, le ou chaque échangeur de chaleur étant muni de deuxièmes moyens de supportage disposés à un niveau peu différent dudit niveau donné et choisi de façon à minimiser les contraintes dues aux dilatations différentielles des conduites, lesdits deuxièmes moyens de supportage étant tels qu'ils permettent un déplacement dudit échangeur selon la direction horizontale de ladite première conduite, lesdits deuxièmes moyens de supportage comprenant en outre des moyens pour limiter les déplacements dudit échangeur

B 6479.3 GD

selon les deux directions perpendiculaires à la direction de ladite conduite, lesdites deux directions étant perpendiculaires entre elles.

On comprend qu'ainsi on permet un libre déplacement de l'échangeur pour absorber les dilatations thermiques de la conduite de sortie du métal liquide chaud et de la cuve, entre la température de remplissage de la cuve qui est de l'ordre de 150°C et la température du métal liquide chaud qui est de l'ordre de 530°C en fonctionnement normal. De plus, pour que l'échangeur ne puisse pas se déplacer de façon inacceptable en cas de séismes par exemple, les deuxièmes moyens de supportage comprennent, selon l'invention, des moyens pour limiter les déplacements dudit échangeur selon deux directions perpendiculaires à la direction de ladite conduite, lesdites deux directions étant perpendiculaires entre elles.

Enfin, l'emploi de deux conduites distinctes, une pour le métal "froid" et l'autre pour le métal chaud, à deux niveaux différents, pour relier la cuve à chaque échangeur, permet de mieux maîtriser les problèmes de dilatation. C'est dans ce cas la conduite chaude qui détermine à elle seule la position relative de l'échangeur par rapport à la cuve, et le supportage de l'échangeur intervient cette fois à un niveau différent de celui de la cuve, calculé pour que le couple exercé par l'ensemble des deux conduites sur celui-ci soit minimal. De plus, l'existence de deux conduites distinctes permet de les réaliser différemment : le plus souvent, il y a intérêt à prévoir la canalisation chaude rectiligne et la canalisation "froide" munie de coudes ; enfin, des vannes ou clapets de sécurité et d'isolement sont placés sur ces mêmes conduites permettant de faire travailler en cas de besoin chaque échangeur à un régime particulier, voire de l'isoler

6

temporairement de la chaudière. Ces possibilités représentent un gros avantage en matière de sécurité de la chaudière par rapport aux techniques de l'art antérieur telles qu'elles apparaissent, par exemple, dans le BP 985 463.

De manière préférentielle, les centres de gravité du bloc-pile, cuve principale et son contenu, et du bloc échangeur-pompe sont situés au-dessous de leur niveau de supportage, ce qui permet d'améliorer la stabilité de chacun de ces blocs.

De préférence, la chaudière nucléaire est du type semi-intégré et elle est caractérisée en ce que ladite cuve comprend une cuve externe dite cuve principale munie desdits premiers moyens de supportage, une cuve interne dite primaire coaxiale à la première contenant le coeur et munie de troisièmes moyens de supportage constitués par une couronne solidaire de la paroi interne de la cuve principale supportant une couronne solidaire de la paroi externe de la cuve primaire, lesdits troisièmes moyens de supportage étant disposés à un niveau donné, en ce que ladite première conduite débouche dans la cuve primaire au-dessus du coeur en traversant l'espace annulaire entre la cuve principale et la cuve primaire, en ce que ladite deuxième conduite débouche dans ledit espace annulaire en-dessous d'une cloison horizontale ménagée dans ledit espace annulaire.

De préférence également, le ou chaque échangeur de chaleur comporte des moyens intégrés de mise en circulation dudit métal liquide dans l'échangeur, dans lesdites conduites, dans la cuve et à travers le coeur.

Selon un mode préféré de réalisation, les moyens de supportage de l'échangeur de chaleur consistent en au moins deux éléments de supportage diamétralement opposés par rapport à l'axe vertical de l'enveloppe externe de l'échangeur , chaque élément comportant une plaque support fixe horizontale, une plaque d'appui horizontale solidaire dudit échangeur et disposée au-dessus de ladite plaque support et une première série de rouleaux interposés entre lesdites plaques, lesdits rouleaux ayant des axes de révolution perpendiculaires à la direction de ladite tubulure.

De toute façon, l'invention sera mieux comprise à la lecture de la description qui suit d'un mode de réalisation de l'invention donné à titre d'exemple non limitatif. La description se réfère aux figures annexées sur lesquelles on a représenté :

- sur la fig. 1, une vue générale schématique en élévation et en coupe des éléments principaux d'une chaudière semi-intégrée selon l'invention ;

- sur la fig. 2, une vue verticale en coupe partielle de la partie supérieure d'un échangeur de chaleur montrant le dispositif de supportage ;

- sur la fig. 3, une vue en coupe horizontale selon le plan 3-3 de la fig. 2 ;

- sur la fig. 4, une vue de détail en coupe verticale d'un élément de supportage de l'échangeur de chaleur, et

- sur la fig. 5, une vue de détail en coupe horizontale partielle d'un élément de supportage de l'échangeur de chaleur.

On va décrire l'invention dans le cadre d'une variante particulière d'un réacteur nucléaire à neutrons rapides semi-intégré. Il va cependant de soi que les caractéristiques concernant la liaison entre la cuve du réacteur et l'échangeur ou chacun des échangeurs seraient applicables aux cas de réacteurs à boucles à neutrons rapides ou thermiques. En effet, dans ce cas, il se pose les mêmes problèmes de dilatation de la conduite de sortie et de la cuve, et les mêmes solutions pourraient être adoptées.

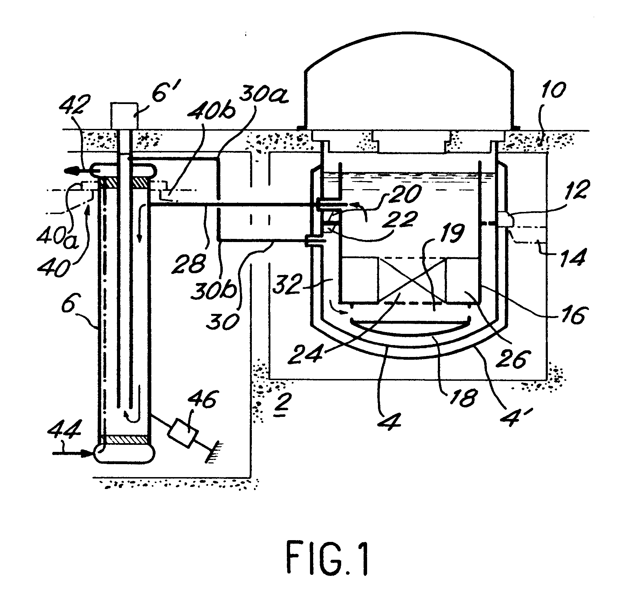

Sur la fig. 1, on a représenté de façon schématique les éléments principaux de la chaudière nucléaire. A l'intérieur d'une enceinte bétonnée 2, on trouve la cuve principale 4 de la chaudière nucléaire avec son enveloppe de sécurité et un échangeur de chaleur 6 avec son enveloppe de rétention de fuites de sodium. Bien entendu, la chaudière nucléaire pourrait comporter plusieurs boucles de refroidissement comportant chacune un échangeur de chaleur 6 associé à la cuve 4. Dans l'exemple particulier décrit, l'échangeur de chaleur 6 réalise directement l'échange entre le métal liquide sortant de la cuve 4 du réacteur et de l'eau vapeur. Bien entendu, on ne sortirait pas du cadre de l'invention si, de façon classique, l'échangeur de chaleur 6 réalisait un échange entre le sodium dit dans ce cas primaire sortant de la cuve et du sodium · secondaire. En outre, la pompe 6' de mise en circulation du métal liquide est intégrée à l'échangeur pour accroître la compacité de l'installation.

La cuve 4 dite principale est supportée par l'intermédiaire de brides ou de consoles périphériques de supportage telles que 12 en appui sur des éléments de supportage 14 liés à la structure bétonnée 2. La cuve est fermée par une dalle supérieure 4a qui est posée sur le rebord périphérique supérieur de la cuve principale 4. A l'intérieur de la cuve principale 4, on trouve une cuve primaire 16 concentrique à la cuve principale 4 et qui comporte un fond 18. Cette cuve primaire 16 comporte sur sa périphérie des éléments de supportage 20 qui coopèrent avec des éléments de supportage 22 solidaires de la face interne de la cuve principale. Il faut noter que les éléments de

B 6479.3 GD

supportage de la cuve principale et de la cuve primaire sont disposés sensiblement dans un même plan horizontal. A l'intérieur de la cuve primaire 16 on trouve le coeur 24 qui repose sur le sommier 19 ainsi que les protections latérales neutroniques 26.

La circulation du métal liquide entre la cuve 4 et l'échangeur 6 se fait par l'intermédiaire d'une canalisation de sortie 28 qui relie l'intérieur de la cuve primaire 16 à l'entrée de l'échangeur 6 et par une conduite 30 d'introduction du métal liquide qui relie la sortie de la pompe intégrée à l'échangeur de chaleur avec l'espace annulaire 32 ménagé entre la cuve primaire et la cuve principale. On constate dès à présent que la conduite 28, qui véhicule un métal liquide chaud ayant traversé le coeur, traverse l'espace annulaire 32. Les dispositifs de manutention du combustible et de contrôle-commande du réacteur sont de type connu et ne sont pas représentés sur cette vue schématique. Ces différents composants sont tels que le centre de gravité du bloc pile soit situé en-dessous des moyens de supportage 12.

Comme on le voit sur la fig. 1, de façon simplifiée, selon l'invention le générateur de vapeur 6 est supporté par des moyens de supportage 40 solidaires de l'enceinte bétonnée 10. Ces moyens de supportage 40 permettent un libre déplacement du générateur selon la direction de l'axe de la conduite 28 sous l'effet de la dilatation de cette conduite 28 et de la cuve. Bien entendu, en plus des conduites 28 et 30 qui raccordent l'échangeur de chaleur 6 à la cuve 4, on trouve des conduites correspondant au circuit secondaire de l'échangeur schématisées en 42 et 44.

Selon le mode préféré de réalisation de l'invention, il s'agit de conduites d'eau-vapeur (42, 44). Dans le cas d'un échangeur classique, ces conduites correspondraient à la circulation du métal liquide secondaire. De toute manière, il est important de noter que dans tous les cas, c'est dans la conduite 28 qui transporte du sodium actif chaud, que l'on veut réduire le plus possible les contraintes dues aux dilatations ou causées par un séisme. En effet, dans la conduite de retour 30, il circule un métal liquide plus froid d'environ 200°C, ce qui limite les différences de température entre arrêt et fonctionnement normal, et d'autre part autorise pour le métal des contraintes plus élevées. On peut d'ailleurs remarquer que la conduite 30 comporte des coudes 30a, 30b qui lui confèrent une souplesse suffisante. Pour ce qui est des conduites 42 et 44, qu'elles transportent du métal liquide secondaire ou de l'eau vapeur, ces fluides ne sont pas radioactifs et il est donc possible de résoudre ces problèmes de dilatation par les procédés usuels et d'autant plus facilement que ces conduites sont situées sur la plus grande partie de leur longueur en dehors de la zone de protection radioactive.

Il faut également remarquer que la cote du plan de supportage du bloc pompe-échangeur 6 défini par les éléments de supportage 40 est peu différente de celles des plans de supportage des cuves principale et primaire définis par les éléments de supportage 14 et 22, la différence entre ces cotes étant choisie par le calcul, de façon à minimiser les contraintes créées par les réactions des conduites "chaude" et "froide" qui débouchent à des niveaux différents aussi bien dans la cuve que dans les blocs pompe-échangeur. En effet, comme cela est expliqué dans le brevet français numéro 78 18823 pour "Chaudière nucléaire à neutrons rapides refroidie par un métal liquide" au nom du demandeur, la tubulure 28 est fixée sur la cuve principale 4, et c'est un ajustage indépendant qui prolonge la tubulure 28 entre la cuve principale et la cuve primaire. En d'autres termes, selon la direction verticale, la différence des déplacements dus aux dilatations thermiques, d'une part, sur la hauteur de cuve entre la pièce de supportage 22 et le raccordement de la tubulure 28 à la cuve 4 et, d'autre part, sur la hauteur de l'enveloppe de l'échangeur entre l'extrémité de raccordement de la tubulure 28 à l'entrée de l'échangeur et le dispositif de supportage 40, est négligeable puisque ces hauteurs sont faibles. Par conséquent, les contraintes dues aux réactions des tuyauteries sur la cuve principale et sur le bloc pompe-échangeur de chaleur prendront aisément des valeurs acceptables pour les diverses distributions de température. Comme on l'explique dans le brevet cité ci-dessus, la cuve principale dans cette région est refroidie par du métal liquide plus froid. Comme on l'expliquera ultérieurement, l'échangeur contenant la pompe primaire est supporté par une pièce qui est relativement froide par rapport au métal liquide circulant dans l'échangeur. On voit donc que l'effet des différences de dilatation selon la direction verticale peut être rendu pratiquement négligeable. Comme le montre la fig. 1, des vérins amortisseurs 46 solidaires de la paroi bétonnée sont fixés à la partie inférieure de l'enveloppe externe de l'échangeur. Ces amortisseurs ont pour but d'amortir les oscillations qui pourrait prendre l'échangeur en cas de séismes, le centre de gravité de l'échangeur étant bien sûr situé en-dessous de son plan de supportage.

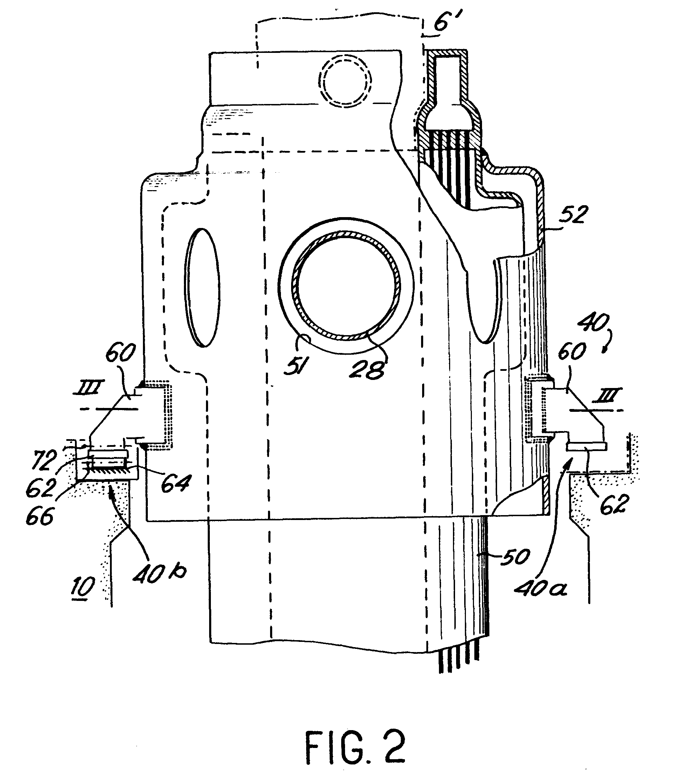

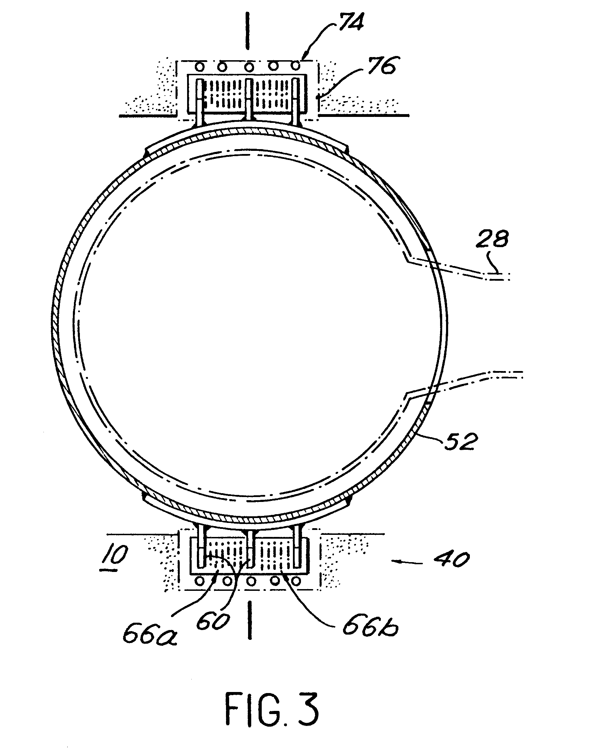

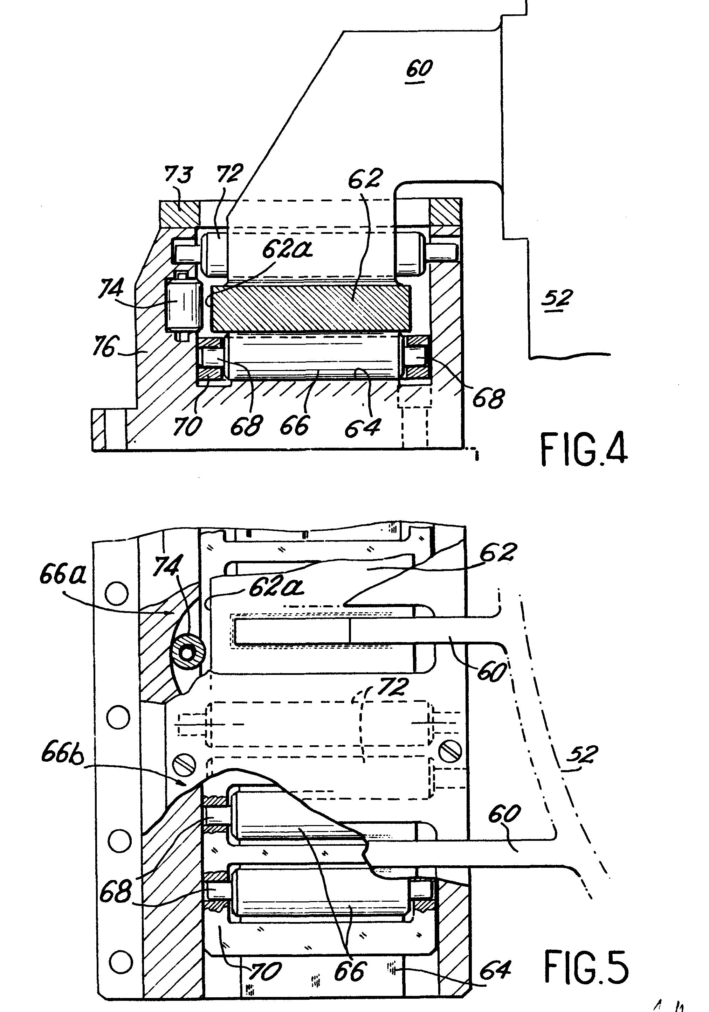

En se référant aux fig. 2 à 5, on va décrire plus en détail le système de supportage de l'échangeur ou de chaque échangeur pour permettre son déplacement selon la direction de l'axe de la conduite 28. La partie

B 6479.3 GD

supérieure de l'enveloppe externe 50 de l'échangeur de chaleur est entourée par une virole 52 fixée à son extrémité supérieure sur l'enveloppe externe 50. Cette virole 52 est capable de supporter la totalité du poids de l'échangeur. On comprend que la virole 52 est à une température sensiblement inférieure à l'enveloppe 50 elle-même qui est munie d'un calorifuge externe non représenté.

Le supportage de l'échangeur est, dans l'exemple décrit, assuré par deux éléments de supportage portant chacun la référence générale 40. Bien entendu, une partie 40a de chaque élément de supportage est solidaire de la virole 52, c'est-à-dire de l'échangeur et une partie 40b est solidaire du massif bétonné 2. Une échancrure 51 permet le passage de la conduite 28 à travers la virole 52.

La partie 40a comprend une patte 60 disposée selon un rayon de la virole 52 et soudée ou boulonnée sur celle-ci. A son extrémité libre est fixée de façon rigide une plaque horizontale 62 dite plaque d'appui.

La partie 40b comprend une plaque de supportage horizontale 64 qui est ancrée dans le massif bétonné 10, la plaque 64 est disposée par construction au-dessous de la plaque 62. Entre ces deux plaques est interposée une première série de rouleaux cylindriques tels que 66 à axes horizontaux. Plus précisément, les axes horizontaux des rouleaux 66 sont orthogonaux à la direction de l'axe de la conduite 28. Les extrémités 68 des rouleaux sont emprisonnées de façon classique dans une cage 70 qui solidarise entre eux les différents rouleaux. On comprend qu'ainsi, lors du mouvement relatif horizontal de la plaque d'appui 62 par rapport à la plaque de supportage 64, sous l'effet des dilatations de la cuve principale, de la conduite 28 et de l'enveloppe 50 de l'échangeur, on a un mouvement de roulement des rouleaux 66 par rapport aux deux surfaces planes. Ainsi, la libre expansion des pièces sous l'effet des contraintes thermiques ne s'accompagne d'aucune contrainte mécanique notable. En fait, on trouve deux ensembles de rouleaux 66a et 66b pour accroître la résistance aux efforts appliqués.

A titre d'exemple, on peut indiquer que dans la variante étudiée, la température normale du métal liquide chaud est de l'ordre de 530°C. La température du métal liquide lors des opérations de remplissage de la cuve est de l'ordre de 150°C. Il s'ensuit pour la chaudière de 1 200 MWe décrite, une amplitude de déplacement du bloc pompe-échangeur de l'ordre de 125 mm, par rapport à sa position à la température de montage, qui sans le dispositif prévu conduirait à des contraintes élevées dans la conduite 28.

De plus, chaque élément de supportage comporte des dispositions qui permettent de s'opposer à un déplacement de l'échangeur en cas de séisme par exemple. Il faut noter par rapport à ce problème que le poids du bloc pompe-échangeur de chaleur 6 est de l'ordre de 265 tonnes. On voit donc que les énergies qui seraient mises en cause dans le cas d'un tel évènement peuvent être très importantes et entraîner des déplacements et des contraintes inacceptables.

Pour s'opposer aux conséquences de secousses sismiques, chaque élément de supportage comprend une deuxième série de rouleaux 72 à axes horizontaux parallèles aux axes des rouleaux 66. Ils sont solidarisés avec la plaque de supportage 64 et montés de telle façon qu'en fonctionnement normal, il n'y ait aucun contact entre la face supérieure de la plaque 62 et les rouleaux 72. Ces rouleaux 72 n'interviennent qu'en cas de séisme pour s'opposer à un mouvement notable de basculement ou de soulèvement de l'échangeur de chaleur. En réalité, une plaque supérieure horizontale 73 est rendue solidaire de la plaque de supportage. Lors du mouvement accidentel de basculement de l'échangeur conduisant au soulèvement de la plaque 62, les rouleaux 72 viennent en contact avec la plaque d'appui 62 et avec la plaque supérieure 73. Ainsi, l'effort est absorbé par la totalité de la section droite des rouleaux et non par leurs axes d'extrémité. De même, une troisième série de rouleaux 74 à axe vertical est montée pivotante dans la pièce 76 solidaire de la plaque de supportage 64. En fonctionnement normal, il existe un jeu entre les rouleaux 74 et la face verticale 62a de la plaque 62. En cas de séismes, ils limitent à une valeur acceptable un déplacement horizontal éventuel selon une direction perpendiculaire à l'axe de la conduite 28.

On comprend qu'ainsi on réalise un système de supportage du bloc pompe-échangeur mobile permettant la mobilité nécessaire à l'absorption des dilatations selon la direction de la conduite 28 qui est elle-même prévue pour résister aux efforts transitoires dus aux composantes éventuelles du séisme maximal envisagé pour le site choisi. Ce système permet de minimiser les contraintes subies par les conduites de liaison entre la cuve et l'échangeur tout en assurant la stabilité de l'échangeur en cas de séisme.

Comme on l'a déjà indiqué, ce système de supportage pourrait s'appliquer aux échangeurs primaires ou intermédiaires d'un réacteur à boucles ainsi qu'aux pompes lorsque celles-ci ne sont pas intégrées à l'échangeur associé, comme il est usuel pour les réacteurs à boucles.

## REVENDICATIONS

1. Chaudière nucléaire à métal liquide caloporteur, caractérisée en ce qu'elle comprend :

- une cuve apte à recevoir le coeur du réacteur et ledit métal liquide ;

- au moins un échangeur de chaleur apte à réaliser un échange thermique entre ledit métal liquide et un deuxième fluide ;

- une première conduite apte à relier ladite cuve à l'entrée du ou d'un échangeur de chaleur, ladite conduite débouchant dans la cuve au-dessus du coeur ;

- une deuxième conduite apte à relier ladite cuve à la sortie dudit ou d'un échangeur de chaleur, ladite cuve étant munie sur sa périphérie externe de premiers moyens de supportage disposés à un niveau donné, ladite première conduite étant sensiblement rectiligne et horizontale et débouchant dans ladite cuve au-dessus et au voisinage desdits premiers moyens de supportage, le ou chaque échangeur de chaleur étant muni de deuxièmes moyens de supportage disposés à un niveau peu différent dudit niveau donné et choisi de façon à minimiser les contraintes dues aux dilatations différentielles des conduites, lesdits deuxièmes moyens de supportage étant tels qu'ils permettent un déplacement dudit échangeur selon la direction horizontale de ladite première conduite, lesdits deuxièmes moyens de supportage comprenant en outre des moyens pour limiter les déplacements dudit échangeur selon les deux directions perpendiculaires à la direction de ladite conduite, lesdites deux directions étant perpendiculaires entre elles.

2. Chaudière selon la revendication 1, caractérisée en ce que le ou chaque échangeur de chaleur comporte concentriquement et à sa partie supérieure des moyens intégrés de mise en circulation dudit métal liquide dans l'échangeur, dans lesdites conduites, dans la cuve et à travers le coeur.

3. Chaudière selon l'une quelconque des revendications 1 et 2, caractérisée en ce que ladite cuve comprend une cuve externe dite principale munie desdits premiers moyens de supportage, une cuve interne dite primaire coaxiale à la première contenant le coeur et munie de troisièmes moyens de supportage consistant en des premières pièces solidaires de la face interne de la cuve principale et en des deuxièmes pièces solidaires de la face externe de la cuve primaire, reposant sur lesdites premières pièces, lesdits troisièmes moyens de supportage étant disposés audit niveau donné, en ce que ladite première conduite débouche dans la cuve primaire au-dessus du coeur en traversant l'espace annulaire entre la cuve principale et la cuve primaire, en ce que ladite deuxième conduite débouche dans ledit espace annulaire en-dessous d'une cloison horizontale semi-étanche ménagée dans ledit espace annulaire.

4. Chaudière selon l'une quelconque des revendications 1 à 3, caractérisée en ce que lesdits deuxièmes moyens de supportage consistent en au moins deux éléments de supportage diamétralement opposés par rapport à l'axe vertical de l'enveloppe externe de l'échangeur, chaque élément comportant une plaque support fixe horizontale, une plaque d'appui horizontale solidaire dudit échangeur et disposée au-dessus de ladite plaque support et une première série de rouleaux interposés entre lesdites plaques, lesdits rouleaux ayant des axes de révolution perpendiculaires à la direction de ladite tubulure.

5. Chaudière selon la revendication 4, caractérisée en ce que chaque élément comprend une deuxième série

B 6479.3 GD

de rouleaux parallèles aux premiers, lesdits rouleaux étant disposés au-dessus de ladite plaque d'appui, solidarisés avec ladite plaque support et montés de telle façon qu'il existe en fonctionnement normal un jeu entre lesdits rouleaux et ladite plaque d'appui.

6. Chaudière selon la revendication 5, caractérisée en ce que chaque élément comprend une troisième série de rouleaux à axes verticaux, aptes à réaliser une butée en déplacement horizontal entre ladite plaque d'appui et un prolongement vertical de ladite plaque support.

7. Chaudière selon l'une quelconque des revendications 1 à 6, caractérisée en ce que les centres de gravité du ou de chaque échangeur de chaleur et le centre de gravité de la cuve sont situés en-dessous de leur niveau de supportage.

8. Chaudière selon l'une quelconque des revendications 5 et 6, caractérisée en ce que chaque élément comprend une plaque supérieure horizontale de butée des rouleaux de la deuxième série, solidaire de la plaque d'appui, disposée de telle façon qu'en cas de mouvements anormaux du composant, les rouleaux de la deuxième série viennent en butée sur ladite plaque supérieure horizontale.

O R I G I N A L : Par procuration du COMMISSARIAT A L'ENERGIE ATOMIQUE
DRONNE Guy

B 6479.3 GD

FIG.1

FIG. 2

FIG.3

FIG.4

FIG.5

| Categorie | Citation du document avec indication, en cas de besoin, des parties pertinentes | Revendication concernée |
|---|---|---|
| | GB - A - 1 026 559 (U.K.A.E.A.) <br> * En entier * <br><br> -- | 1 |
| | GB - A - 985 464 (U.K.A.E.A.) <br> * Page 4, lignes 24-48; figures 1-3 * <br><br> -- | 2 |
| | US - A - 3 185 631 (LONG) <br> * Colonne 3, lignes 1-58; figures 1,4,5 * <br><br> -- | 4 |
| A | DE - A - 2 346 868 (INTERATOM) | |
| A | LU - A - 78 145 (BABCOCK) | |
| A | FR - A - 2 124 140 (C.E.A.) | |
| A | FR - A - 2 311 388 (C.E.A.) <br><br> ---- | |

**DOCUMENTS CONSIDERES COMME PERTINENTS**

**CLASSEMENT DE LA DEMANDE (Int. Cl.²)**

G 21 C 1/02
G 21 C 13/02
F 22 B 37/24

**DOMAINES TECHNIQUES RECHERCHES (Int. Cl.²)**

G 21 C 1/02
G 21 C 13/02
G 21 C 15/24

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 03-09-1979 | KAVCIC |

OEB Form 1503.1 06.78